# EUROPEAN PATENT SPECIFICATION

(11) **EP 2 487 465 B1**
(45) Date of publication and mention of the grant of the patent: **18.12.2019**
(21) Application number: 12154740.0
(22) Date of filing: 09.02.2012
(51) Int. Cl.: G01F 1/684, G01L 19/00, G01L 23/24

(54) **SENSOR STRUCTURE**
SENSORSTRUKTUR
STRUCTURE DE CAPTEUR

(30) Priority: 09.02.2011 JP 2011025556
(43) Date of publication of application: 15.08.2012
(73) Proprietor: Hitachi Automotive Systems, Ltd., Hitachinaka-shi Ibaraki 312-8503 (JP)
(72) Inventor: Saito, Takayuki, Ibaraki, 312-0062 (JP); Hanzawa, Keiji, Ibaraki, 312-0062 (JP); Yogo, Takayuki, Ibaraki, 312-8503 (JP)
(74) Representative: MERH-IP Matias Erny Reichl Hoffmann Patentanwälte PartG mbB

(56) References cited:
- EP-A1- 2 012 097
- EP-A1- 2 154 494
- DE-A1- 4 317 312
- DE-A1- 19 711 939
- US-A- 4 215 565

## Description

### BACKGROUND OF THE INVENTION

### Field of the Invention

The present invention relates to a sensor structure suitable for measuring a physical quantity of intake air in an internal combustion engine, and to an internal combustion engine controller using the same.

### Background Art

A typical pressure measurement device for measuring pressure in an intake air tube includes a pressure measurement part formed of a semiconductor and a pressure intake tube (see JP Patent Application Publication No. 2006-292391 A).

As an air mass flow measurement technology for an internal combustion engine, a heating resistor type mass airflow measurement device is known (see JP Patent No. 3523022 B). This device takes advantages of the fact that an amount of heat that a heating resistor is deprived of is in correlation with an amount of intake air flow and is capable of directly measuring an air mass flow required for controlling combustion of an engine, and is therefore widely used especially as a flowmeter for controlling an air-fuel ratio in an automobile. Such a heating resistor type mass airflow measurement device may be integrated with the pressure measurement device (see JP Patent Application Publication No. 2008-304232 A).

An automobile using an electronically controlled fuel injection system has been commonly used. In recent years, it has been developed for achieving higher performance and higher functionality. It is desirable to reduce the number of components and improve the appearance inside an engine room by integrating a plurality of sensors and control equipment with each other. As an example, a mass airflow measurement device is integrated with a pressure measurement device so that connectors can be used in common, thereby reducing the number of process steps for assembling components into an automobile and simplifying a wiring harness.

In an engine control system in which a single pressure measurement device is disposed on upstream of a throttle valve, for example, in an intake air tube, the pressure measurement device is required to measure pressure while air flows. Accordingly, a sensor structure needs to be provided such that a dynamic pressure effect caused by airflow is avoided as much as possible.

Also, when a pressure measurement device is integrated with a mass airflow measurement device and a pressure intake port is defined by a part of a housing structural component making up a skeleton of the mass airflow measurement device, the mass airflow measurement device is disposed at a position where intake air in an engine flows. Accordingly, a sensor structure for measuring pressure also needs to be provided such that a dynamic pressure effect caused by airflow is avoided as much as possible.

The pressure intake port can be opened inside or in the middle of an insertion hole on the sensor provided in the intake air tube to avoid the dynamic pressure effect caused by the airflow. At this time, the molding dimensional precision of an air cleaner or the like making up the intake air tube is not so high and the positional relationship between the mounting position of the sensor and the position of the insertion hole on the sensor is easily varied. When the pressure intake port is disposed on the side face of the housing structural component, an opening portion of the pressure intake port may be brought into contact with the side wall of the insertion hole on the sensor and the sensitivity of pressure measurement may be reduced. Thus, it has been desired to provide a sensor structure for stably measuring pressure even when the air cleaner has a problem in dimensional accuracy and the pressure intake port is brought into contact with the side wall of the insertion hole on the sensor.

Also, in an automobile, intake air is sucked in after air suspended substances are removed by an air filter element provided in an air cleaner box. However, a large pressure loss caused by the air filter element, which involves the engine output reduction and the fuel consumption rate deterioration, is not desired, and therefore a filter capable of filtering fine carbon contained in exhaust gas is not used. Accordingly, fine air suspended substances or rain water are sucked into the engine through the filter.

Thus, a sensor structure for preventing contaminated substances, water droplets, or the like from arriving at the pressure measurement part of the pressure measurement device also has been desired.

Document EP 2012097 A1 discloses a sensor structure comprising a mass airflow measurement device inserted into a sensor insertion port provided in an intake air tube component including an intake air tube and fixed to the intake air tube, and a pressure measurement device mounted in a housing structural component of the mass airflow measurement device for measuring the pressure inside the intake air tube. The pressure intake port comprises an opening portion being larger in cross-sectional area than the rest of the pressure intake port.

### SUMMARY OF THE INVENTION

An object of the present invention, which is aimed at solving the problems mentioned above, is to provide a sensor structure for stably measuring pressure even when a pressure intake port is brought into contact with a side wall of an insertion hole on a sensor in integrating a mass airflow measurement device with a pressure measurement device, and for preventing contaminated substances, water droplets, or the like from arriving at a pressure measurement part of the pressure measurement device.

According to the present invention, a sensor structure according to claim 1 is provided.

According to the present invention, a sensor structure for stably measuring pressure even when a pressure intake port is brought into contact with a side wall of an insertion hole on a sensor in integrating a mass airflow measurement device with a pressure measurement device, and for preventing contaminated substances, water droplets, or the like from arriving at a pressure measurement part of the pressure measurement device can be provided.

### BRIEF DESCRIPTION OF THE DRAWINGS

FIG. 1 is a structural diagram of a sensor not according to the present invention and its cross sectional view taken along the line A-A.
FIG. 2 is a structural diagram of a sensor not according to the present invention and its cross sectional view taken along the line B-B.
FIG. 3 is a structural diagram of a sensor according to an embodiment of the present invention and its cross sectional view taken along the line C-C.
FIG. 4 is a structural diagram of a sensor according to another embodiment of the present invention and its cross sectional view taken along the line D-D.
FIG. 5 is a structural diagram of a sensor according to another embodiment of the present invention and its cross sectional view taken along the line E-E.
FIG. 6 illustrates an internal combustion engine of an electronic fuel injection type to which another embodiment of the present invention is applied.

### DETAILED DESCRIPTION OF THE PREFERRED EMBODIMENTS

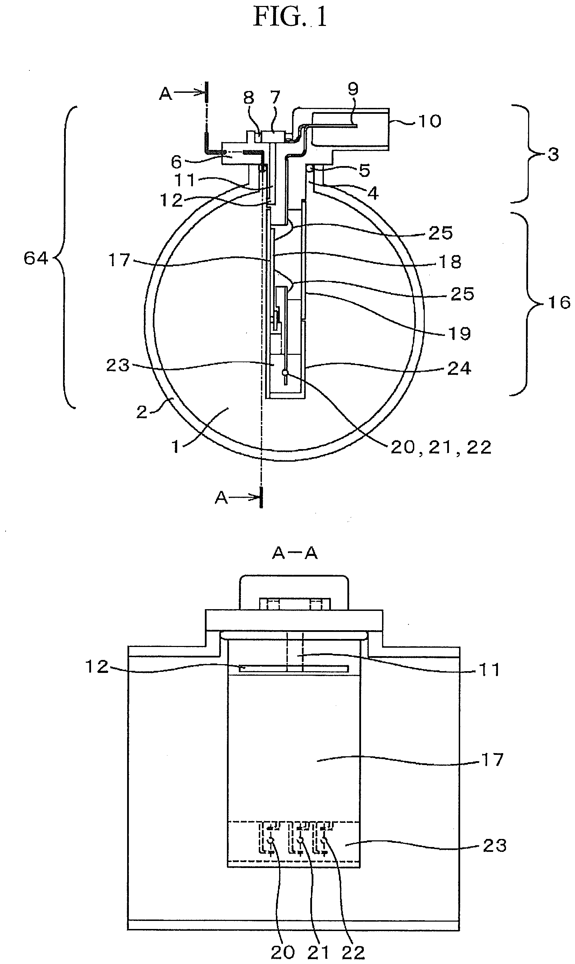

A specific structure example of a sensor will be explained with reference to FIG. 1.

A main air flow passage component 2 forming a main air flow passage 1 includes an insertion port 4 into which a part of a multifunction sensor 64, which is provided by integrating a pressure measurement device 3 with a mass airflow measurement device 16, is inserted via a gasket 5. The skeleton of the mass airflow measurement device 16 is formed using a housing structural component 6, a base plate 17, an electronic circuit board 18, a cover 19, a heating resistor 20 for measuring an air mass flow, a temperature compensation resistor 21 used for measuring the air mass flow, an intake air temperature sensor 22 used on a side close to a vehicle, a bypass air passage 23 including a measurement element for measuring the air mass flow and temperature, and a bypass air passage structural component 24 forming the bypass air passage 23.

The heating resistor 20 for detecting the air mass flow and temperature of intake air, the temperature compensation resistor 21, and the intake air temperature sensor 22 are connected to the electronic circuit board 18 via a bonding wire 25. The electronic circuit board 18 is electrically connected to a connector terminal 9 via the bonding wire 25 to perform an input/output from/to the outside via an I/O connector 10.

The basic structure of the integrated pressure measurement device 3 is formed by the housing structural component 6. A sensor chip 7 having a pressure measurement part is mounted on the housing structural component 6, and is fixed and sealed by a sealing agent 8 such as an adhesive agent. The sensor chip 7 is electrically connected to the connector terminal 9 by means of bonding, welding, or the like to perform an input/output from/to the outside via the I/O connector 10 as well as the mass airflow measurement device 16. The housing structural component 6 includes a pressure intake port 11 connecting the sensor chip 7 to the main air flow passage 1 for measuring the pressure inside an intake air tube using the pressure intake port 11.

The pressure intake port 11 has a cross-sectional area expanded at a position close to the main air flow passage 1, and forms an enlarged opening 12 having an area vertically expanded in the air-flowing direction. The enlarged opening 12 is disposed on the side face of the housing structural component 6.

Since air flows in the main air flow passage 1, the pressure measurement device 3 needs to measure the pressure while the air flows. The dynamic pressure effect caused by airflow and the drift effect caused by twist of the tube or the air cleaner exist inside the intake air tube in the automobile, and accordingly, it is required to avoid such effects. To reduce the dynamic pressure effect and the drift effect, the enlarged opening 12 is disposed on the side face of the housing structural component 6 and is formed to be long in the air-flowing direction. Due to such a structure, the pressure can be taken in from a wide range so as to be equalized and measured.

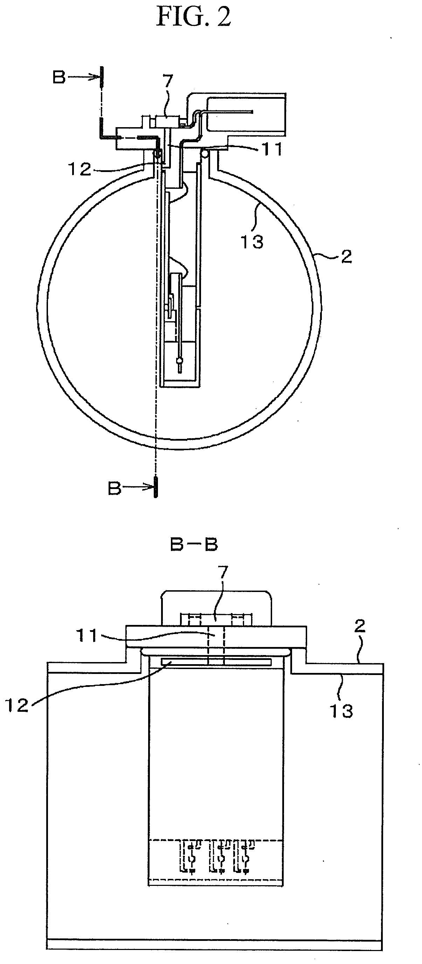

FIG. 2 is a structural diagram of a sensor according to another example and its cross sectional view taken along the line B-B. In the automobile, intake air is sucked in after air suspended substances are removed by an air filter element provided in an air cleaner box. However, a large pressure loss caused by the air filter element, which involves the engine output reduction and the fuel consumption rate deterioration, is not desired, and therefore a filter capable of filtering fine carbon and the like contained in exhaust gas is not used. Accordingly, fine air suspended substances or rain water are sucked into the engine through the filter. To prevent such contaminated substances and water droplets from arriving at the sensor chip 7 through the pressure intake port 11, the enlarged opening 12 of the pressure intake port is disposed on an outer side compared to an inner wall surface 13 of the main air flow passage component 2. In other words, the enlarged opening 12 of the pressure intake port is disposed on a position opposite to the wall surface forming the sensor insertion port 4. Due to such a structure, the possibility of sucking contaminated substances and water droplets is considerably reduced. Also, since the enlarged opening 12 and the pressure intake port 11 are not directly exposed to the airflow, the dynamic pressure effect caused by the airflow and the drift effect can be reduced.

The main air flow passage component 2 usually corresponds to a resin-molded air cleaner in the automobile, the molding dimensional precision of which is not so high. For example, when the multifunction sensor 64 is attached and fixed to the air cleaner by a screw, a positional relationship between the insertion port 4 and a screw hole is easily varied. Consequently, the pressure intake port 11 is brought into contact with the side wall of the insertion port 4 when the pressure intake port 11 is disposed on the side face of the housing structural component 6, which may unfavorably affect the pressure measurement and sensitivity. Accordingly, by providing the enlarged opening 12 as shown in FIG. 2, the possibility that the enlarged opening 12 is completely closed is almost zero even when being brought into contact with the side wall of the insertion port 4 because its opening portion is enlarged. Therefore, a pressure measurement function can be always maintained.

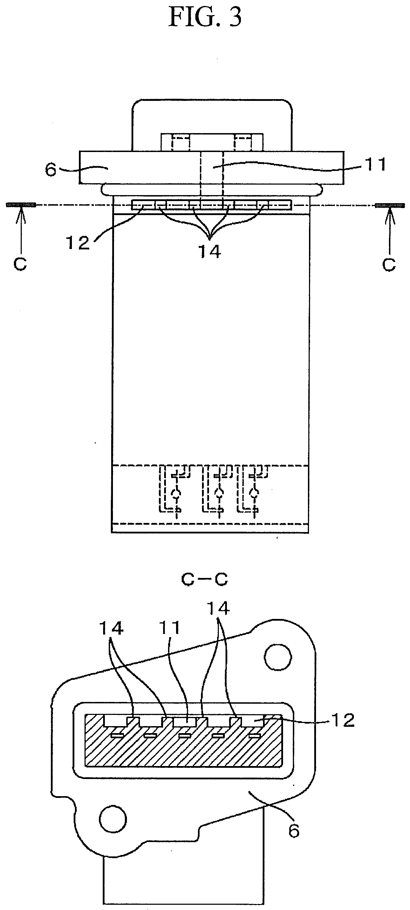

FIG. 3 is a structural diagram of a sensor according to an embodiment of the present invention and its cross sectional view taken along the line C-C. In the structure as shown in FIG. 2, the enlarged opening 12 unfavorably guides water droplets or the like to the pressure intake port 11 when the water droplets or the like are delivered into the enlarged opening 12. To avoid such a problem, partition walls 14 are provided in the enlarged opening 12 to divide the enlarged opening 12 into a plurality of blocks. To enable the pressure measurement even when the side wall of the insertion port 4 and the housing structural component 6 are in contact with each other due to the low dimensional accuracy of the air cleaner, the partition walls 14 are provided to be lower than the outer wall surface of the housing structural component 6.

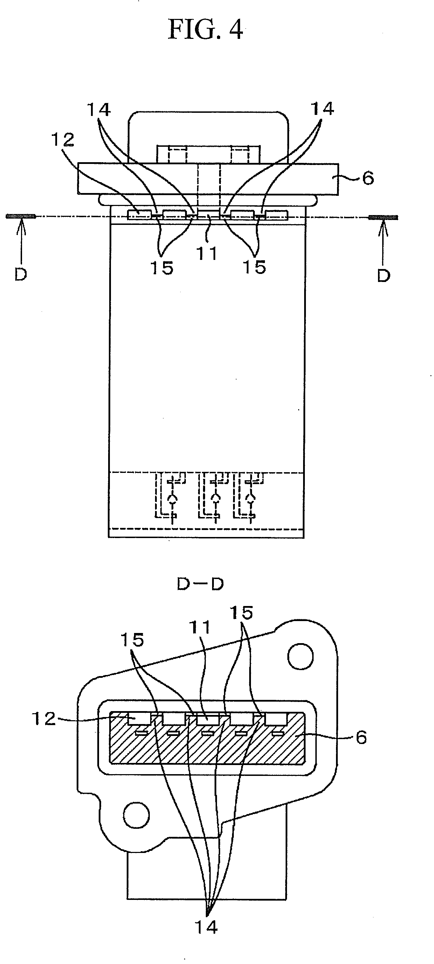

FIG. 4 is a structural diagram of a sensor according to another embodiment of the present invention and its cross sectional view taken along the line D-D. To prevent water droplets, which are delivered regardless of the structure as shown in FIG. 3, from moving to an adjacent block, the upper surface of each partition wall 14 has the same height as the outer wall surface of the housing structural component 6. Communication grooves 15 are provided only on the upper surfaces of the partition walls 14 which partition the enlarged opening 12 so as to enable the pressure measurement.

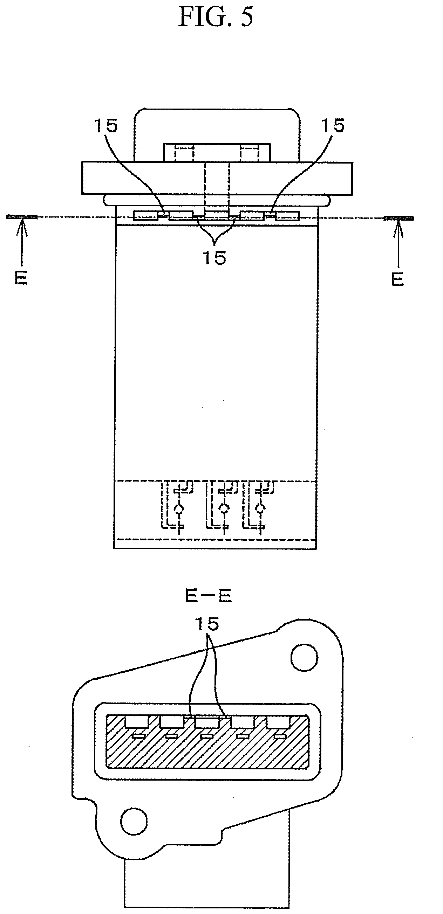

FIG. 5 is a structural diagram of a sensor according to another embodiment of the present invention and its cross sectional view taken along the line E-E. The adjacent communication grooves 15 are staggeredly arranged in the structure shown in FIG. 5 compared to the structure as shown in FIG. 4 to further resist the moving of water droplets.

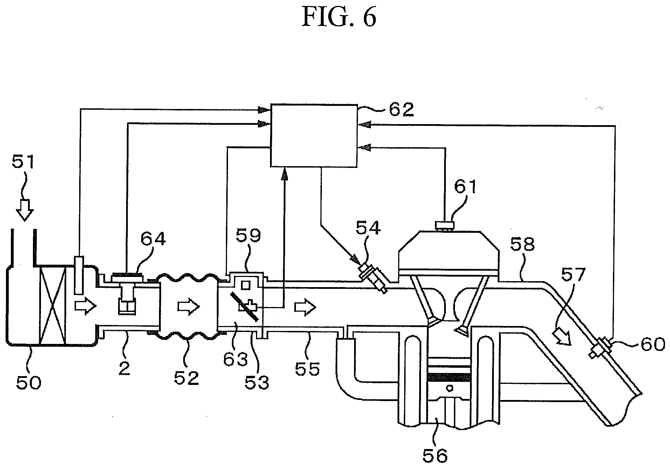

FIG. 6 illustrates an internal combustion engine of an electronic fuel injection type to which another embodiment of the present invention is applied. An intake air 51 sucked by an air cleaner 50 is sucked into an engine cylinder 56 through an intake manifold 55 including the main air flow passage component 2 to which the multifunction sensor 64 is inserted, an intake air duct 52, a throttle body 53, and a fuel injector 54 to which fuel is supplied. On the other hand, a gas 57 generated in the engine cylinder 56 is discharged through an exhaust manifold 58.

An engine control unit 62 inputs an air mass flow signal, a humidity signal, a pressure signal, and a temperature signal outputted from the multifunction sensor 64, a throttle valve angle signal outputted from a throttle angle sensor 59, an oxygen concentration signal outputted from an oxygen meter 60 provided in the exhaust manifold 58, and an engine rotational speed signal outputted from an engine speed meter 61, and calculates an optimal fuel injection amount and an optimal output torque. Such values are used to control the fuel injector 54 and the throttle valve 63.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### DESCRIPTION OF SYMBOLS

- 1: main air flow passage
- 2: main air flow passage component
- 3: pressure measurement device
- 4: insertion port
- 5: gasket
- 6: housing structural component
- 7: sensor chip
- 8: sealing agent
- 9: connector terminal
- 10: I/O connector
- 11: pressure intake port
- 12: enlarged opening
- 13: inner wall surface
- 14: partition wall
- 15: communication groove
- 16: mass airflow measurement device
- 17: base plate
- 18: electronic circuit board
- 19: cover
- 20: heating resistor
- 21: temperature compensation resistor
- 22: intake air temperature sensor
- 23: bypass air passage
- 24: bypass air passage structural component
- 25: bonding wire
- 50: air cleaner
- 51: intake air
- 52: intake air duct
- 53: throttle body
- 54: fuel injector
- 55: intake manifold
- 56: engine cylinder
- 57: gas
- 58: exhaust manifold
- 59: throttle angle sensor
- 60: oxygen meter
- 61: engine speed meter
- 62: engine control unit
- 63: throttle valve
- 64: multifunction sensor

## Claims

1. A sensor structure, comprising:
- a mass airflow measurement device (16) inserted into a sensor insertion port (4) provided in an intake air tube component including an intake air tube and fixed to the intake air tube; and
- a pressure measurement device (3) mounted in a housing structural component of the mass airflow measurement device for measuring pressure inside the intake tube, wherein
- a pressure intake port (11) connecting the pressure measurement device (3) to an inside of the intake air tube is provided in the housing structural component, and
- an opening portion of the pressure intake port (11) is provided on a side face of the housing structural component, wherein
the pressure intake port (11) has a cross-sectional area expanded at a position adjacent to the main air flow passage (1), wherein
the pressure intake port (11) forms an enlarged opening (12), wherein
the enlarged opening (12) is provided on a side face of the housing structural component (6) parallel to an air-flowing direction, and wherein
the opening portion has an elongated shape in the air-flow direction,
**characterized in that**:
the opening portion is divided into a plurality of blocks by partition walls (14), and disposed such that an upper surface of each partition wall (14) is lower than an outer wall of the housing structural component.

2. The sensor structure according to claim 1, wherein
the opening portion is provided at a position opposite to a wall surface forming the sensor insertion port (4).

3. The sensor structure according to claim 1 or 2, wherein
the upper surface of each partition wall (14) has the same height as a wall surface of the housing structural component, and adjacent opening portions of the partition walls (14) on a side close to an intake air tube are connected by communication grooves (15) provided on the upper surfaces of the partition walls (14).

4. The sensor structure according to claim 3, wherein
the communication grooves (15) are staggeredly arranged.

## Patentansprüche

1. Sensorstruktur, die Folgendes umfasst:
- eine Luftmassendurchfluss-Messvorrichtung (16), die in eine Sensor-Einsetzöffnung (4) eingeführt wird, die in einer Einlassluftrohrkomponente vorgesehen ist, die ein Einlassluftrohr enthält, und an dem Einlassluftrohr befestigt ist; und
- eine Druckmessvorrichtung (3), die in einer Gehäusestrukturkomponente der Luftmassendurchfluss-Messvorrichtung montiert ist, um den Druck in dem Einlassrohr zu messen, wobei
- ein Druckeinlasskanal (11), der die Druckmessvorrichtung (3) mit einem Innenraum des Einlassluftrohrs verbindet, in der Gehäusestrukturkomponente vorgesehen ist, und
- ein Öffnungsabschnitt des Druckeinlasskanals (11) an einer Seitenfläche der Gehäusestrukturkomponente vorgesehen ist, wobei
der Druckeinlasskanal (11) eine Querschnittsfläche aufweist, die an einer Position neben dem Hauptdurchlass (1) erweitert ist, wobei
der Druckeinlasskanal (11) eine vergrößerte Öffnung (12) bildet, wobei
die vergrößerte Öffnung (12) an einer Seitenfläche der Gehäusestrukturkomponente (6) parallel zu einer Luftdurchflussrichtung vorgesehen ist und wobei
der Öffnungsabschnitt in der Luftdurchflussrichtung eine längliche Form aufweist,
**dadurch gekennzeichnet, dass**
der Öffnungsabschnitt durch Trennwände (14) in mehrere Blöcke aufgeteilt ist und derart angeordnet ist, dass eine obere Fläche jeder Trennwand (14) niedriger ist als eine Außenwand der Gehäusestrukturkomponente.

2. Sensorstruktur nach Anspruch 1, wobei
der Öffnungsabschnitt an einer Position vorgesehen ist, die sich gegenüber einer Wandoberfläche befindet, um die Sensor-Einsetzöffnung (4) zu bilden.

3. Sensorstruktur nach Anspruch 1 oder 2, wobei
die Oberfläche jeder Trennwand (14) dieselbe Höhe aufweist wie eine Wandfläche der Gehäusestrukturkomponente, und benachbarte Öffnungsabschnitte der Trennwände (14) auf einer Seite, die sich in der Nähe eines Einlassluftrohres befindet, durch Kommunikationsrillen (15) verbunden sind, die an den oberen Flächen der Trennwände (14) vorgesehen sind.

4. Sensorstruktur nach Anspruch 3, wobei
die Kommunikationsrillen (15) versetzt angeordnet sind.

## Revendications

1. Structure de capteur, comprenant :
- un dispositif de mesure de débit d'air massique (16) Introduit dans un orifice d'introduction de capteur (4) prévu dans un composant à tube d'admission d'air incluant un tube d'admission d'air et fixé sur le tube d'admission d'air ; et
- un dispositif de mesure de pression (3) monté dans un composant structurel formant boîtier du dispositif de mesure de débit d'air massique pour mesurer une pression à l'intérieur du tube d'admission,
dans laquelle
- un orifice d'entrée de pression (11) qui connecte le dispositif de mesure de pression (3) à l'intérieur du tube d'admission d'air est prévu dans le composant structurel formant boîtier, et
- une portion ouverte de l'orifice d'entrée de pression (11) est prévue sur une face latérale du composant structurel formant boîtier,
dans laquelle
l'orifice d'entrée de pression (11) forme une ouverture élargie (12),
dans laquelle l'ouverture élargie (12) est prévue sur une face latérale du composant structurel formant boîtier (6) parallèlement à une direction d'écoulement d'air, et
dans laquelle
la portion ouverte a une forme allongée dans la direction d'écoulement d'air, **caractérisée en ce que** :
la portion ouverte est divisée en une pluralité de blocs par des parois de cloisonnement (14), et disposée de telle façon qu'une surface supérieure de chaque paroi de cloisonnement (14) est plus basse qu'une paroi extérieure du composant structurel formant boîtier.

2. Structure de capteur selon la revendication 1, dans laquelle
la portion ouverte est prévue à une position opposée à une surface de paroi formant l'orifice d'introduction de capteur (4).

3. Structure de capteur selon la revendication 1 ou 2, dans laquelle
la surface supérieure de chaque paroi de cloisonnement (14) a la même hauteur qu'une surface de paroi du composant structurel formant boîtier, et des portions d'ouverture adjacentes des parois de cloisonnement (14) sur un côté proche d'un tube d'admission d'air sont connectées par des gorges de communication (15) prévues sur les surfaces supérieures des parois de cloisonnement (14).

4. Structure de capteur selon la revendication 3, dans laquelle
les gorges de communication (15) sont agencées en suivant des gradins.
